# FASCICULE DE BREVET EUROPEEN

(11) **EP 0 641 419 B1**
(45) Date de publication et mention de la délivrance du brevet: **20.08.1997**
(21) Numéro de dépôt: 94910436.8
(22) Date de dépôt: 18.03.1994
(51) Int. Cl.: F16D 13/64

(54) **DISQUE PORTE-GARNITURES, NOTAMMENT POUR VEHICULE AUTOMOBILE**
REIBELÄGE TRAGENDE SCHEIBE,INSBESONDERE FÜR KRAFTFAHRZEUGE
FRICTION LINING HOLDER DISC, PARTICULARLY FOR MOTOR VEHICLES

(30) Priorité: 19.03.1993 FR 9303193; 21.06.1993 FR 9307475; 14.07.1993 US 91060; 15.07.1993 EP 93401832; 09.11.1993 FR 9313341
(43) Date de publication de la demande: 08.03.1995
(73) Titulaire: VALEO, 75848 Paris Cédex 17 (FR)
(72) Inventeur: THIRION DE BRIEL, Jacques, F-92700 Colombes (FR); DALBIEZ, André, F-95100 Argenteuil (FR); VILLATA, Gino, I-14021 Buttigliera D'Asti (IT); BLARD, Michel, F-92130 Issy-les-Moulineaux (FR)
(74) Mandataire: Gamonal, Didier
(86) Numéro de dépôt international: FR9400297
(87) Numéro de publication internationale: WO9421934

(56) Documents cités:
- FR-A- 768 143
- FR-A- 794 147
- FR-A- 2 692 635
- GB-A- 459 006
- GB-A- 1 465 913
- US-A- 4 108 699

## Description

La présente invention concerne un disque porte-garnitures, pour support de garnitures de frottement, propre à la constitution d'un disque de friction, notamment pour véhicule automobile, du genre comportant une partie centrale et une partie périphérique fractionnées en pales radiales propres à recevoir les garnitures de frottement, chacune desdites pales se raccordant d'un seul tenant à ladite partie centrale par un pied et comportant au moins une zone de portée globalement parallèle au plan moyen de ladite partie centrale, pour contact avec l'une au moins desdites garnitures de frottement et fixation de celles-ci. Dans un disque de friction, ces garnitures s'étendent de part et d'autre de la partie périphérique.

Les disques de friction sont parfois sujets, en fonctionnement, à des vibrations désagréables constituant ce qu'il est usuel de désigner par broutement. Ce broutement peut se produire aussi bien à faible couple, lors d'une manoeuvre de parking, qu'à couple élevé lors d'un changement de vitesses sur route.

Les zones de portée ont parfois une étendue pas aussi grande que souhaitée, ce qui entraîne un phénomène d'incrustation, les garnitures de frottement s'affaissant à l'intérieur des creux existant entre deux portées d'appui d'une même pale.

Il en résulte un manque de flexibilité qui à charge maximale est responsable au moins pour partie du broutement.

En outre il se pose un problème de contact avec notamment le plateau de pression de l'embrayage.

En effet dans un embrayage, à chaque engagement de l'embrayage, les garnitures de frottement se trouvent progressivement serrées entre un plateau de pression et un plateau de réaction.

L'échauffement induit par le frottement conduit inévitablement à une mise en cône du plateau de pression, comme explicité par exemple dans le document US-A-2,902,130, et il en est de même, bien que dans une moindre mesure, pour le plateau de réaction.

Il en résulte que la zone suivant laquelle les garnitures de frottement sont soumises à la pression de l'un et de l'autre de ces plateaux se décale progressivement vers l'axe de l'ensemble, avec, pour conséquence, une usure inégale de ces garnitures de frottement et une réduction de leur efficacité (couple transmis moindre), voire même leur broutement.

Pour pallier ces inconvénients et résoudre ce problème, on a proposé dans le document EP-A-0 579 554, bénéficiant de la date du 15-07-92 en ce qui concerne ses figures 1 à 22 et conforme à ce titre au préambule de la revendication 1, de créer des pales du type tripode présentant une zone centrale de portée et deux zones périphériques de portée de part et d'autre de ladite zone centrale.

La zone centrale est décalée axialement par rapport aux zones de portées périphériques et à la partie centrale.

Dans une réalisation, ces pales alternent circonférentiellement avec une série de languettes.

Les pales tripodes, par leur zone centrale, servent à la fixation de l'une des garnitures de frottement, dans ce cas celle associée au plateau de pression de l'embrayage, tandis que les languettes servent à la fixation de l'autre garniture de frottement, dans ce cas celle associée au plateau de réaction de l'embrayage.

Grâce à cette disposition les languettes ont une élasticité suffisante pour suivre le mouvement de mise en cône du plateau de réaction, les pales tripodes suivent le mouvement de mise en cône du plateau de pression et ont une grande longueur circonférentielle avec de grandes surfaces de contact.

En outre, les phénomènes d'incrustation et de broutement sont diminués et les pales peuvent tourner à des vitesses de rotation plus élevées.

Lorsque l'on sert progressivement élastiquement les garnitures de frottement entre les plateaux de pression et de réaction, la garniture de frottement, éventuellement fractionnée, associée au plateau de pression est bien soutenue puisqu'elle trouve une réaction sur l'autre garniture de frottement par l'intermédiaire de ses zones périphériques de portée.

Il n'en est pas de même de l'autre garniture de frottement, éventuellement fractionnée, portée par les languettes. Il en résulte que les zones de la garniture en regard des languettes s'usent moins d'où une usure de la garniture qui n'est pas bien répartie.

La présente invention a pour objet de pallier ces inconvénients.

Suivant l'invention, un disque porte-garnitures du type sus-indiqué est caractérisé en ce que certaines au moins desdites languettes présentent, à la faveur d'un pli de raccordement, au moins une zone de portée supplémentaire décalée axialement en direction de la zone centrale des pales tripodes.

Grâce à l'invention, lors de l'écrasement élastique des garnitures de frottement, la garniture de frottement associée aux languettes trouve une réaction du fait de la nouvelle zone de portée, formant zone de stabilisation, qui est propre à venir en appui contre l'autre garniture de frottement.

Les phénomènes d'incrustation sont ainsi réduits, l'usure de la garniture des languettes étant mieux répartie.

En outre les phénomènes d'usure de la garniture, associée aux pales, sont réduits puisque la zone de portée des languettes crée un appui supplémentaire. Pour l'autre garniture les usures sont plus régulières.

La zone de portée supplémentaire peut être réalisée au niveau de l'extrémité libre de la languette, c'est à dire à la périphérie externe de celle-ci.

En variante, elle peut être pratiquée radialement plus vers l'intérieur à la faveur d'une découpe, la zone étant alors dirigée vers l'intérieur ou l'extérieur.

Bien entendu il est possible de prévoir deux zones de portées supplémentaires, l'une à l'extrémité libre de la languette, l'autre plus à l'intérieur.

En variante la languette peut être à l'image de la pale tripode et comporter deux zones de portée périphériques supplémentaires. Grâce à toutes ces dispositions, il est possible d'utiliser, du fait de l'appui supplémentaire selon l'invention, une fixation des garnitures de frottement par collage sur certaines au moins des pales tripodes.

De préférence, on fixe alors directement la garnitures de frottement concernée uniquement par collage sur toutes les zones centrales des dites pales.

Ainsi, on peut réduire encore l'inertie du disque porte-garnitures et celui-ci peut tourner encore à des vitesses de rotation plus élevées.

En effet, la garniture de frottement concernée a alors juste l'épaisseur utile, car il n'y a pas de surépaisseur à prévoir comme dans le cas d'un rivetage. En outre, on supprime les trous de rivetage ce qui accroît la résistance du disque de friction et diminue les amorces de rupture.

Bien entendu, comme décrit dans le document EP-A-0 579 554, on peut prolonger la zone centrale de la pale tripode radialement vers l'intérieur à la faveur d'une découpe affectant le pli longitudinal, ce qui permet d'augmenter encore la zone de portée et de fixation offerte à la garniture. On peut fixer l'autre garniture aux languettes radiales par rivetage, mais bien entendu pour réduction encore de l'inertie du disque de friction on peut également fixer par collage l'autre garniture de friction sur les dites languettes.

L'inverse est également possible avec fixation par rivetage d'une des garnitures sur les pales tripodes et fixation de l'autre garniture par collage sur les dites languettes. Toute les combinaison sont possibles.

Si désiré, du fait de la prolongation de certaines au moins des zones centrales de pales tripodes, de manière précitée, on peut fixer la garniture de frottement à l'aide de deux rangées de rivets, dont l'un est implantés à la faveur dudit prolongement comme décrit dans le sous mentionné document EP-A-0 579 554. On peut prévoir également deux rangées de rivets du niveau des languettes.

On peut également, pour une meilleure stabilité, prévoir des zones de portée supplémentaires dans la pale tripode, soit dans ses zones périphériques, soit dans sa zone centrale notamment lorsque la garniture concernée est collée, car dans ce cas on supprime les trous des rivets, ce qui favorise l'implantation des dites zones de portée supplémentaires et rend le collage plus solide en diminuant les phénomènes de pelage.

Suivant une autre caractéristique, les languettes ont une extrémité libre rétrécie circonférentiellement et portant la zone de portée supplémentaire. Ceci permet de donner une bonne souplesse aux zones de portée supplémentaires des languettes, tout en ayant la possibilité d'élargir circonférentiellement les zones périphériques de portée des pales tripodes.

Suivant une autre caractéristique, les languettes ont une forme effilée en direction de leur périphérie externe, en sorte que la zone d'enracinement avec la partie centrale du disque porte-garnitures est augmentée, ce qui accroît la robustesse dudit disque. Ceci permet également de diminuer la raideur de la zone de portée supplémentaire de la languette.

La description qui va suivre illustre l'invention en regard des dessins annexés dans lesquels :
- la figure 1 est une vue en coupe axiale d'un disque de friction équipé d'un disque porte-garnitures selon l'invention ;
- la figure 2 est une vue partielle en élévation dudit disque porte-garnitures avec hachurage des zones de portée ;
- la figure 3 est une vue en coupe agrandie selon la ligne 3-3 de la figure 2 ;
- la figure 4 est une vue en coupe agrandie selon la ligne 4-4 de la figure 2.

Les figures 5 à 10,12 sont des vues analogues à la figure 4 pour d'autres exemples de réalisation.

La figure 11 est une vue en coupe selon la ligne 11,11 de la figure 10.

La figure 13 est une vue en coupe selon la ligne 13,13 de la figure 12.

Dans ces figures est illustré un disque porte-garnitures propre à la constitution d'un disque de friction pour véhicule automobile.

Ce disque comporte une partie centrale 16 et d'un seul tenant une partie périphérique fractionnée en pales radiales 672 alternant circonférentiellement, ici régulièrement, avec une série de languettes radiales 671 dans le plan de la partie centrale 16 du disque porte-garnitures.

Comme décrit dans la demande EP-A-0 579 554, chaque pale se raccorde à la partie centrale 16 par un pied longitudinal 480 et présente une zone centrale de portée 423 et deux zones périphériques de portée 422.

La zone centrale 423 est décalée axialement par rapport à la partie centrale et aux zones de portées périphérique, ici dans le plan de ladite partie centrale.

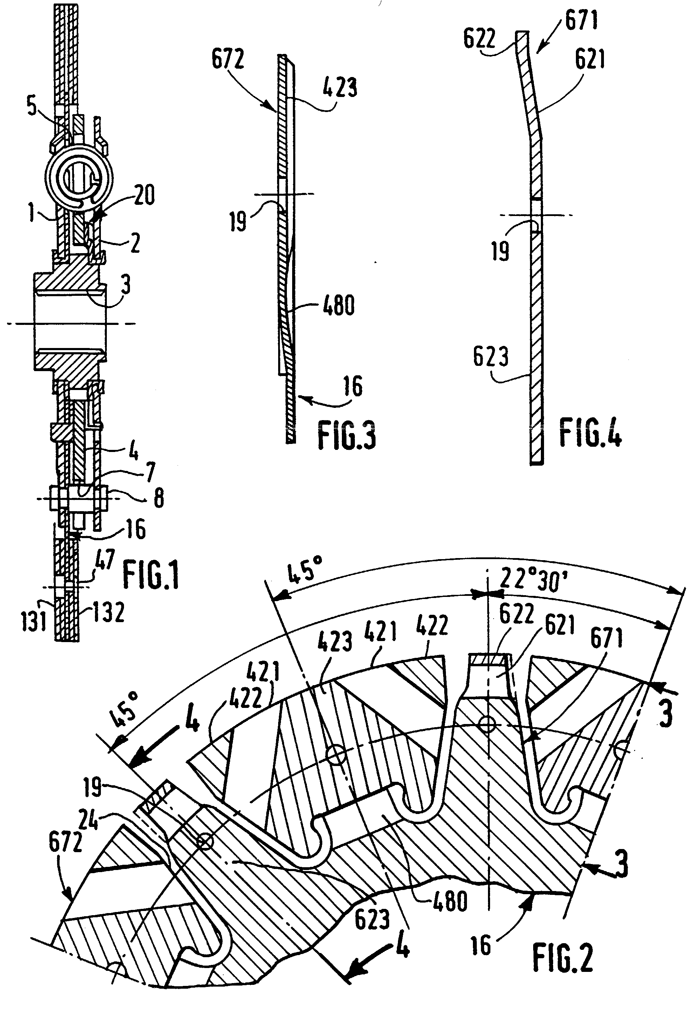

La zone centrale 423, de grande étendue, sert à la fixation d'une garniture de frottement 132, tandis que les languettes 671 servent à la fixation d'une autre garniture de frottement 131. A cet effet, les languettes 671 et les zones centrales 423 des pales 672 présentent ici des trous 19, répartis sur une même circonférence, pour fixation desdites garnitures 131,132 au disque porte-garnitures ici par l'intermédiaire de rivets 47 (figure 1).

En variante, les trous 19 ne sont pas répartis j sur une même circonférence pour formation d'un détrompeur.

En variante, on peut procéder à un collage, ce qui permet de supprimer les trous et d'améliorer la résistance des pales, de manière décrite ci-après.

Plus précisément le disque porte-garnitures avec ses garnitures 131,132 appartient ici à un disque de friction comportant deux parties coaxiales montées mobiles l'une par rapport à l'autre à l'encontre d'organes élastiques à action circonférentielle 5 et de moyens de frottement 20 à action axiale.

Un tel disque est décrit par exemple dans la demande EP-A-0 579 554, ainsi que dans le brevet US-5,014,842 auquel on pourra se reporter.

Ici l'une des parties comporte deux rondelles de guidage 1,2 et le disque porte-garnitures, tandis que l'autre partie coaxiale comporte un voile 4 solidaire en rotation d'un moyeu 3, par sertissage (non représenté), ou ici par intervention de moyens d'engrènement à jeu visibles notamment à la figure 3 du brevet US-5,014,842.

Ainsi ces moyens comportent des dentures de forme trapézoïdale formées à la périphérie externe du moyeu 3 et à la périphérie interne du voile 4, lesdites dentures engrenant à jeu.

Des ressorts de faible raideur, non visibles, s'appuient à chacune de leur extrémité sur des coupelles montées dans des échancrures du moyeu 3 et du voile 4 pour accouplement élastique entre lesdites pièces.

On peut inverser les structures, le disque porte-garnitures étant alors solidaire du voile 4 mobile en rotation par rapport au moyeu 3, tandis que les rondelles de guidage sont alors solidaires du moyeu 3.

De même le disque porte-garnitures peut être solidaire du voile 4, lui-même solidaire du moyeu 3, le disque de friction étant alors du type rigide.

Ici le disque porte-garnitures est accolé par sa partie centrale 16 à la rondelle de guidage 1 et est solidarisé à celle-ci à l'aide de colonnettes traversant à jeu des ouvertures 7 pratiquées dans le voile 4.

Ces colonnettes 8 solidarisent entre elles les rondelles 1,2 disposées de part et d'autre du voile 4.

Les organes élastiques 5 consistent ici en des ressorts à boudin montés ici par paire dans des fenêtres en vis-à-vis pratiquées dans les rondelles de guidage 1,2 et dans le voile 4 de manière connue en soi.

Les moyens de frottement 20 comportent une rondelle de frottement interposée axialement entre le voile 4 et la rondelle 1, ainsi qu'une rondelle d'application calée en rotation sur la rondelle de guidage 2 à l'aide de pattes axiales engagées dans des ouvertures de ladite rondelle 2.

Un ressort prend appui sur la rondelle 2 et sollicite la rondelle d'application en contact du voile 4.

Le disque porte-garnitures est équipé de deux garnitures de frottement annulaires 131,132 montées dos-à-dos, de part et d'autre de la partie centrale 16.

Ces garnitures de frottement sont ici du type organique en étant circonférentiellement continues et en étant renforcées par des fibres de verre, de KEVLAR ou autres.

Dans un embrayage, les garnitures 131,132 sont normalement serrées entre les plateaux de pression et de réaction (non visibles) de l'embrayage solidaires en rotation du vilebrequin du moteur à combustion interne du véhicule automobile, tandis que le moyeu 3, grâce à son alésage interne cannelé, est lié en rotation avec l'arbre d'entrée de la boîte de vitesses.

Lors de la manoeuvre de l'embrayage, pour désengager celui-ci, on desserre les garnitures de frottement 131,132 en sorte qu'en position embrayage désengagé celles-ci ne sont pas en contact avec lesdits plateaux de pression et de réaction.

Lorsque l'on réengage l'embrayage les garnitures 131,132 sont serrées élastiquement progressivement entre lesdits plateaux.

Ce serrage progressif est dû ici en majeure partie aux pales tripodes 672 et plus particulièrement grâce à leurs zones périphériques de portée 422 souples.

Ces pales 672 ont une forme de tripode avec trois zones planes de portée respectivement 422 et 423.

La zone plane centrale 423 est en contact avec la garniture de frottement 132 associée au plateau de pression et sert à la fixation de ladite garniture 132. Cette zone 423 se rétrécit en direction de la périphérie externe du disque porte-garnitures. Elle est donc plus large à sa périphérie interne.

Les zones 422 s'étendent à la périphérie externe des pales 672 de part et d'autre de la zone centrale 423. Elles ont une forme globalement triangulaire et sont raccordées à la zone 423 par des plis obliques 421, ici symétriques par rapport à l'axe radial de symétrie de la pale 672. Ces plis 421 s'étendent donc obliquement par rapport au dit axe radial et permettent un décalage axial entre les zones 422,423.

Les zones 422 et 423 sont décalées axialement en étant parallèles entre elles. Plus précisément les zones 422 sont propres à venir en contact avec la garniture de frottement 131 associée au plateau de réaction de l'embrayage. Ici elles s'étendent dans le plan de la partie centrale 16.

La zone centrale 423 se raccorde à la partie centrale 16 par un pli d'orientation tangentielle 480 ou pli longitudinal perpendiculaire ici à l'axe de symétrie radial de la pale. Le pli 480 s'étend ici de manière symétrique par rapport au dit axe de symétrie radial de la pale. Ce pli 480 oblique forme le pied de la pale et permet un décalage axial de la zone 423 par rapport à la partie centrale 16.

Ainsi lors de l'écrasement des garnitures 131,132 les zones 422 se déforment axialement. On notera que les plis 480 sont d'une grande largeur et donc très robustes et que la zone 423 présente deux zones internes encadrant le pied 480. Des fentes 24, en forme de canne, séparent les pales 672 des languettes 671. Ces fentes débouchent à la périphérie externe du disque porte-garnitures et ont une extrémité interne fermée en forme de C pour raccordement aux plis 480.

Les pales 672 ont une grande étendue circonférentielle et sont séparées ici les unes des autres par un angle de 45°, un angle de 22°,30' existant ici entre l'axe de symétrie d'une pale 672 et l'axe de symétrie d'une languette 671 et donc entre deux trous 19. Une pale 672 est donc encadrée de manière régulière par deux languettes 671, les trous 19 étant répartis régulièrement circulairement.

Les languettes 671 ont donc ici une faible étendue circonférentielle en étant souples et longues radialement.

Suivant l'invention, un disque porte-garnitures du type sus-indiqué est caractérisé en ce que certaines au moins desdites languettes 671 présentent, à la faveur d'un pli de raccordement 621, au moins une zone de portée 622 supplémentaire décalée axialement en direction de la zone centrale 423 des pales tripodes.

Ainsi lors de l'écrasement des garnitures 131,132 ladite zone 622 est propre à venir en contact avec la garniture 132 pour offrir ainsi une réaction. Cette zone 622 constitue donc une zone de stabilisation s'étendant ici dans le plan de la zone centrale 423 grâce au pli oblique 621 d'orientation radiale. En variante la zone 622 peut être légèrement en retrait par rapport à la zone 423. Ainsi la garniture 131 reste bien plane.

Dans les figures 1 à 4 la zone de portée supplémentaire est réalisée à l'extrémité libre de la languette 671, c'est à dire à la périphérie externe de celle-ci. La languette 671 a une forme effilée, sa zone d'enracinement avec la partie centrale 16 étant plus large que sa périphérie externe constituée par la zone de portée 622 précitée, dont la périphérie externe est située sur la même circonférence que celle des pales 672.

Ainsi la languette 671 présente d'un seul tenant une partie principale 623 de portée et de fixation de la garniture 131 grâce aux trous 19, un pli radial de raccordement 621 et la zone de portée 622. La hauteur du pli 621 est supérieure à la hauteur de la portée 622. Ces languettes 671 d'orientation radiale sont donc souples et flexibles. Leur effilement permet de donner de la souplesse à la portée 621,622.

On notera que l'extrémité libre 622,621 de la languette 671 est rétrécie circonférentiellement, ce qui permet de donner encore plus de souplesse à la portée 622, qui s'étend circonférentiellement entre deux zones 422 à la périphérie externe du disque. Cela permet également d'augmenter la portée des zones périphériques 422.

Ainsi on obtient un disque porte-garnitures avec à sa périphérie externe de grandes zones de portée réduisant les phénomènes d'incrustation et de broutement car les garnitures de frottement 131,32 restent dans un plan bien parallèle. Le disque porte-garnitures et donc le disque de friction peuvent ainsi tourner à grande vitesse tout en suivant le mouvement de mise en cône des plateaux de pression et de réaction. Les usures des garnitures sont encore mieux réparties.

On appréciera que les plis 480 et 621 donnent une bonne stabilité au disque porte-garnitures, ce qui permet d'avoir un bon contact des garnitures de frottement avec les plateaux de pression et de réaction, ce qui réduit les usures des garnitures de frottement.

Ici la zone de portée 622 est de hauteur moindre que celle des portées périphériques 422. La hauteur du pli 621 et de la zone 622 étant globalement égale à celle de la zone oblique 422. En effet on recherche ici un point d'appui supplémentaire et une souplesse en sorte que la zone 622 constitue une zone de stabilisation.

En variante on peut modifier la raideur de la zone 622 de manière simple en diminuant ou en augmentant la longueur du pli 621, en sorte que la périphérie externe des languettes peut s'étendre sur une circonférence de diamètre inférieur ou supérieur à celle de la circonférence de la périphérie externe des pales 672.

On appréciera que le bon équilibre du disque de friction et la bonne planéité de ses garnitures de frottement notamment dûs à la répartition régulière des trous de fixation 19 et à leur position sur l'axe de symétrie des languettes 671 et des pales 672.

On notera également la simplicité de fabrication grâce au déplacement radial possible de l'outil de découpe permettant la fabrication de disques avec des pales et des languettes de hauteur différente.

Ici en position embrayage engagé (garnitures 131,132 serrées) un espace existe entre les deux garnitures 131,132, en sorte que les pales 672 ne sont pas totalement écrasées pour permettre auxdites garnitures de s'adapter à la forme des plateaux de pression et de réaction.

Bien entendu la présente invention n'est pas limitée à l'exemple de réalisation décrit. En particulier les pales tripodes peuvent avoir une autre forme telle celles décrites dans le susmentionné document EP-A-0 579 554.

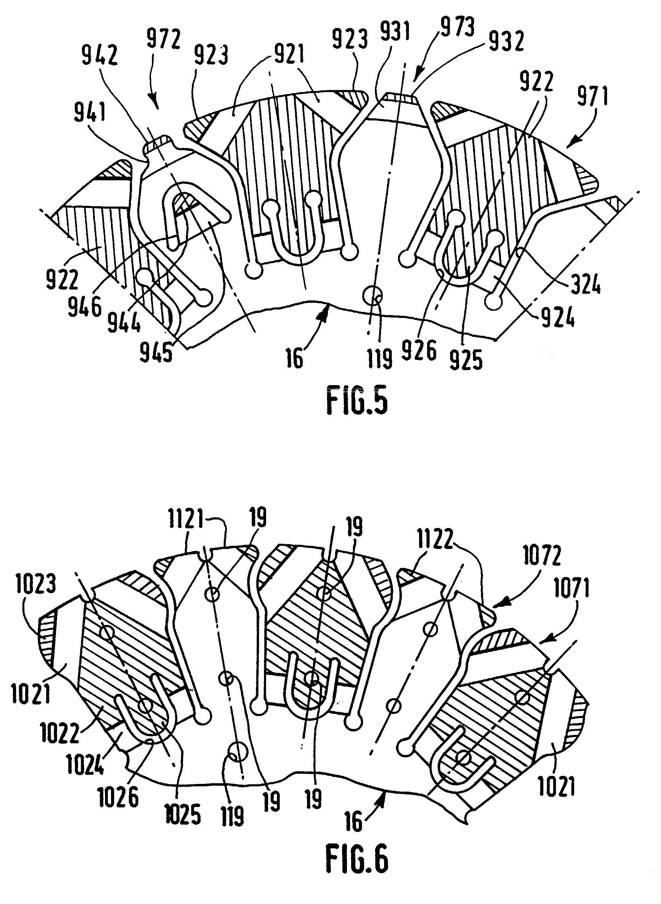

Ainsi, à la figure 5, la pale tripode 971 présente une zone centrale de portée 922, rétrécie à sa périphérie externe et décalée axialement par rapport à la partie centrale 16 à la faveur des plis obliques 921 par rapport à l'axe de symétrie radiale de la pale et au pli longitudinal 924 perpendiculaire audit axe de symétrie.

La zone centrale 922 est prolongée centralement, radialement vers l'intérieure à la faveur d'une découpe 926 centrale en forme de U affectant le pli longidudinal 924. Ce prolongement a globalement la forme d'une languette au pattes 925 avec une zone d'enracinement à la zone centrale 922 rétrécie, les extrémités verticales de la découpe 926 débouchant dans des trous circulaires.

La patte 925 est donc dirigée vers l'axe de l'ensemble et présente une extrémité libre arrondie.

Les zones de portée périphériques 923 sont globalement dans le plan de la partie 16. Ces zones 923 font saillies circonférentiellement par rapport à la zone centrale 922, en sorte que les pales 971 ont globalement la forme d'un T.

On profite de cette forme pour élargir circonférenciellement les languettes 972,973 radialement dans leur zone médiane. Ainsi, ces languettes 972,973 sont plus larges radialement centralement qu'à leurs extrémités libres et qu'à leurs zone de raccordement avec la partie 16.

Ici les languettes radiales 972 et 973 ont une configuration différentes. Ces languettes alternent circonférentiellement avec les pales 971, et ce d'une manière régulière. L'extrémité libre de la languette 972 est rétrécie circonférentiellement et présentent une zone de portée supplémentaire 942, de forme semblable à la portée 622, raccordée à la partie principale de la languette par un pli de raccordement 941, présentant, pour une bonne souplesse, une largeur constante au niveau de la zone 942, décalée axialement en direction de la zone centrale de porté 922 des pales 971. Ce pli 941 s'élargie à sa base. Ici, la zone supplémentaire 942 est dans le plan de la zone 922 de la pale 971. Bien entendu, ladite zone 942 peut être légèrement en retrait par rapport à la zone 922.

La languette 973 présente à son extrémité libre une zone 932 raccordée par un pli 931 à la zone principale de la languette 973.

Le pli 931 et la zone 932, ici dans le plan de la zone centrale 922, ont une forme trapézoidale. Les plis 941 et 931, de largeur variable, ont une hauteur moindre que le pli 621 de la figure 2.

Ainsi qu'on l'aura compris, grâce aux deux jeux de languettes, il est possible d'avoir un décalage axiale entre les zones 942 et les zone 932 en sorte qu'on a un bon soutien des garnitures lors de l'engagement de l'embrayage.

Ici, la partie centrale 16 présente des trous de passage 119 pour la fixation de la partie centrale 16 à la rondelle de guidage 1 ou au voile 4 selon les cas.

On notera que la découpe 926 affecte centralement le pli 924 qui est ainsi dédoublé ce qui améliore le serrage progressif de la pale 971. Ce pli a une bonne tenue mécanique malgré la découpe.

On notera que les fentes 324 séparant les languettes radiales 972,973 des pales 971, ont une forme tordueuse due à l'élargissement centrale desdites languettes.

Ici des garnitures 131 et 132 sont fixées directement par collage sur la partie principale des languettes 972,973 et sur les zones centrales 922 des pales 971. On notera que le prolongement 925 favorise le collage.

Grâce à toutes ces dispositions, on peut réduire l'épaisseur des garnitures 131,132.

Ainsi, les dites garnitures 131,132 ont juste l'épaisseur requise, car il n'y a pas besoin de prévoir de surépaisseur pour les rivets 47 comme dans le mode de réalisation des figures 1 à 4.

Ainsi l'inertie du disque de friction est diminuée, ce qui est favorable pour ménager, lors du désengagement de l'embrayage, les engrenages que présentent la boîte de vitesse sur l'arbre d'entrée sur lequel est calé le moyeu 3.

En outre, les pales et les languettes sont rigidifiés, puisqu'ils ne présentent pas de trous pour le passage des rivets.

Ainsi, on peut en profiter pour créer, par exemple dans la languette 972 une zone de portée supplémentaire 944, décalée axialement en direction de la zone 922 et ce à la faveur d'un pli 945 raccordant ladite zone 944 à la partie principale à la languette 972 dans le plan de la partie 16.

La création de cette zone supplémentaire est réalisée à la faveur d'une découpe 946, globalement en forme de V, dirigée radialement vers l'extérieur, contrairement à la découpe 926.

Ainsi, il est formé une languette ou patte 944,945 dirigée radialement vers l'extérieur, en s'étendant de manière symétrique par rapport à l'axe de symétrie radiale de la languette 972.

Bien entendu, la création de la zone de portée supplémentaire 925 permet également la création d'un trou supplémentaire pour la fixation par rivetage de la garniture 132.

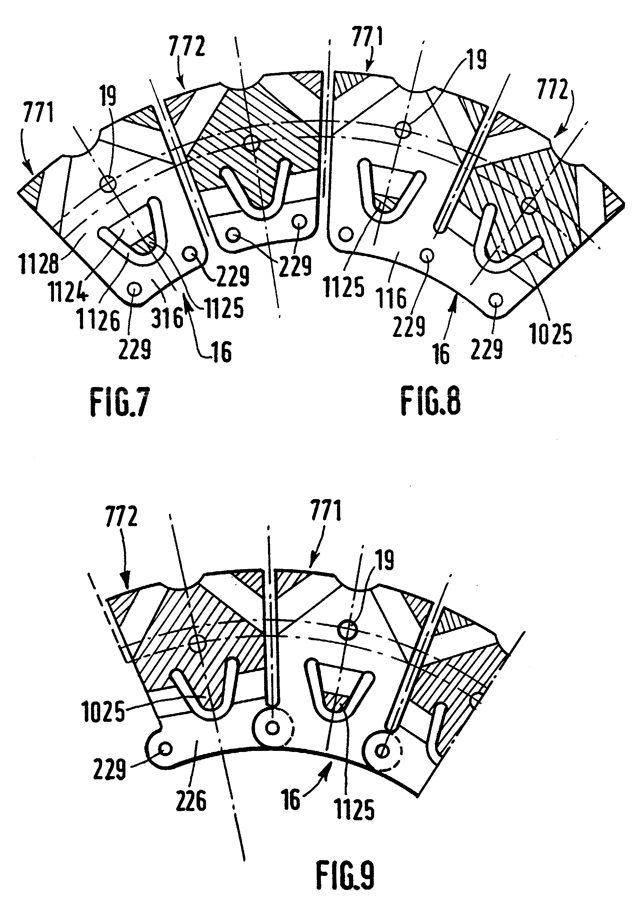

Ainsi, à la figure 6 chaque languette 1072 et chaque pale tripode 1071 présente deux trous 19 pour le passage des organes de fixation des garnitures 131,132.

Ces trous 19 sont radialement alignés sur l'axe de symétrie radiale des languettes radiales 1072 et des pales 1071.

L'un des trous 19 est implanté à la faveur de la zone du prolongement 1025 de la zone centrale délimité par une découpe 1026 en forme de U affectant centralement le pli longitudinal 1024 de la pale 1071. Le prolongenment 1025, en forme de languette ou patte, est dans le plan de la zone centrale de portée 1022 de la pale 1071, la zone 1022 étant décalée axialement par rapport à la zone centrale 16 grâce au pli 1024 et aux plis 1021 obliques par rapport à l'axe de symétrie radiale de la pale 1071.

Les plis 1021 se raccordent aux zones de portée périphériques 1023 globalement parallèles aux plis 1021.

Les zones 1023 sont globalement dans les plan de la zone 16.

Les languettes 1072 ont une forme semblable aux pales 1071 à la seule différence que leur partie principale est dans le plan de la zone centrale 16.

Les languettes 1072 radiales présentent donc à leur périphérie externe deux zones de portée périphérique supplémentaires 1122, globalement dans le plan de la zone centrale 1022 des pales 1071.

Ces zones 1122 se raccordent par des plis 1121 obliques par rapport à l'axe de symétrie radiale de la languette 1072 à la zone principale de la dite languette.

Ici, les pales 1071 présentent un renflement à leur périphérie externe et les languettes 1072 sont élargies circonférentiellement à leur périphérie externe.

Bien entendu, les languettes et les pales tripodes peuvent être distinctes les une des autres en étant rapportées, par exemple, par des trous 229 à la rondelle 1 ou au voile 4.

Ainsi, à la figure 7 les pales tripodes 772 alternent circonférentiellement avec les languettes 771 radiales ayant une forme semblable à celles des pales 772, comme explicité à la figure 6.

Ainsi, la périphérie interne 316 de la languette 771 présente deux trous 229 pour passage des organes de fixation, tels que des rivets, à la rondelle 1 par exemple.

Ici la languette 771 présente dans sa partie centrale une zone de portée supplémentaire 1125.

Cette zone 1125 est dans le plan de la zone centrale de la pale 772 et est raccordée par un pli 1124 de la partie principale 1128 de la languette 771.

Tous ceci est réalisé grâce à la découpe 1126 globalement en forme de V.

Le pli 1124 avec la zone de portée 1125 effilée forme globalement une languette ou patte dirigée vers l'axe de l'ensemble contrairement au mode de réalisation de la figure 5.

La languette 772 est prolongée radialement au delà de son pli longitudinal vers l'axe de l'ensemble pour sa fixation à la rondelle, à l'aide de trous 229 permettant le passage des organes de fixation.

Bien entendu, figure 8, languette 771 et la pale 772 peuvent être reliées ensembles à leur base.

Dans ce cas, chaque pale 771 est d'un seul tenant avec une bande de matière 116 globalement en forme de secteur annulaire.

La bande 116 relie une pale 771 à une languette 772 et comporte trois trous de fixation 229 pour sa fixation à la rondelle 1 ou au voile 4, ici par rivetage.

Dans ces figures 7 et 8 les pales 772 et les languettes 771 sont à l'image l'une de l'autre, car leur zone centrale présente une patte 1025,1124,1125 globalement en forme de V dirigée vers l'axe de l'ensemble.

La patte 1025 affecte le pli longitudinal de la languette 772 comme explicité ci-dessus.

Bien entendu (figure 9), on peut fractionner la partie centrale en bandes 226 avec des oreilles à chacune de leurs extrémités circonférentielles. Les oreilles sont dotées de trous 229 et se recouvrent d'une languette à une pale 772 consécutive.

Les bandes 226 sont fixées ici à la rondelle 1 par rivetage à la faveur des trous 229.

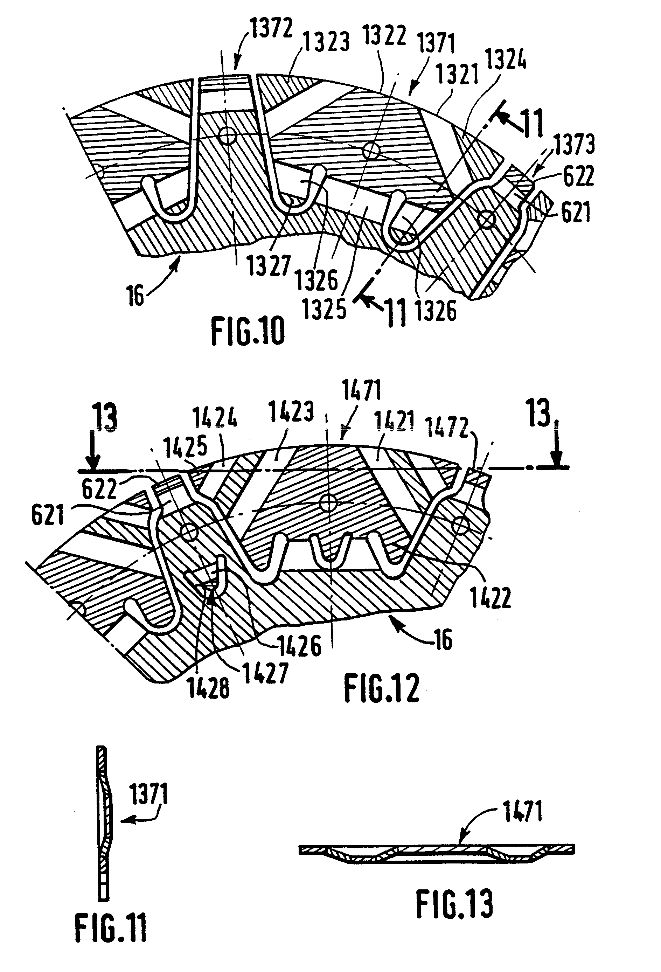

Bien entendu (figure 10 et 11), la zone centrale 1322 de la pale 1371, présentant des plis obliques 1321 un pli longitudinal 1325, et deux zones de portée périphérique 1322 et 1324, peut porter deux zones supplémentaires de portées 1327 s'étendant dans le plan de la partie principale des languettes radiales 1372,1373.

Ces zones 1327 encadrent le pli 1325 et sont raccordées par des plis longitudinaux 1326 à la zone centrale 1322.

Il est ainsi formé deux languettes au pattes 1326,1327 dirigées vers l'axe de l'ensemble et s'étendant de part et d'autre du pli longitudinal 1325.

On notera que les languettes 1372 et 1373 sont distinctes l'une de l'autre, la languette 1373, de forme semblable à la languette 671 de la figure 2, étant rétrécie à sa périphérie externe, en sorte que la pale tripode 1371 est dissymétrique, la zone de porté périphérique 1324 ayant alors une plus grande portée que l'autre zone de portée périphérique adjacente à la languette 1372.

Bien entendu (figure 12 et 13), on peut créer des zones de portée supplémentaires 1425 dans les pales 1471 à la faveur des zones de portée périphériques de la dite pale.

Les zones de portée 1425 s'étendent dans le plan de la zone centrale 1422. Plus précisément, la zone centrale 1422 est raccordée par un pli oblique 1421 à une zone de portée périphérique 1423 dans le plan de la partie principale de la languette 1472.

Cette zone 1423 se raccorde par un pli oblique 1424 par rapport à l'axe de symétrie radiale de la pale 1471 à la zone de portée supplémentaire 1424. Cette zone 1425 est dans le plan de la zone supplémentaire 622 de la languette 1472.

Cette languette 1472 présente également comme dans les figure 7 à 9 une zone de portée supplémentaire 1427 raccordée par un pli 1426 à la partie principale de la languette 671.

Tous ceci est formé à la faveur d'une découpe 1428 globalement en forme de V. Ainsi la zone 1427 est dans le plan de la zone centrale 1422.

On obtient grâce à toutes ces zones supplémentaires une bonne stabilité des garnitures de frottement favorable à une réduction des usures.

Bien entendu, dans les figures 7 à 9, on peut fixer par collage les garnitures de frottement 131,132 aux languettes et aux pales 771,772.

Les garnitures de frottement 131,132 peuvent être fractionnées. En variante, chaque garniture peut comporter une couronne de support continue et ajourée pour fixation de plots de frottement comme décrit dans le susmentionné document EP-A-0 579 554.

Les plis tangentiels 480 peuvent ne pas constituer à eux seuls le pied des pales, un bout des pieds raccordant les plis à la partie centrale du disque.

Comme visible en pointillés à la figure 2, les plis 621 et les zones 622 ne sont pas forcément symétriques et il peut y avoir une alternance d'une languette à l'autre de la dissymétrie.

Bien entendu, selon les applications on peut supprimer les zones de portées pratiquées à la périphérie externe des languettes radiale. Par exemple à la figure 5, on peut supprimer le pli 941 et la zone 942 et conserver la zone 944 et la découpe 946.

A la figure 12 on peut supprimer la zone 622 et le pli 621 et conserver la zone 1427. On peut créer également deux découpes dirigées radialement en sens inverse et délimitant un pli de raccordement portant une zone de portée supplémentaire.

Toutes les combinaisons sont possibles.

On appréciera que dans les figures 7 à 9 les trois zones de portées supplémentaires à savoir la partie 1125 et les deux zones de portées périphériques des languettes 771 sont répartie judicieusement de manière triangulaire ce qui est très favorable pour la stabilité et la réduction des usures des garnitures 131,132.

Bien entendu, les plis obliques raccordant les zones de périphériques de portée à la zone centrale peuvent ne pas être symétriques par rapport à l'axe de symétrie radiale de la pale. Il en est donc de même de la zone centrale.

Les zones de portée supplémentaires ne sont pas forcement disposées sur l'axe de symétrie radial de la languette. Un léger décalage peut exister.

Bien entendu, on peut remplacer par exemple, les pattes 1025 des pales 772 par les pattes 1125,1124 de la figure 7 pour formation d'une zone d'appuie supplémentaire décalée vers la languette 771.

## Revendications

1. Disque porte-garnitures propre à la constitution d'un disque de friction, notamment pour véhicule automobile, du genre comportant une partie centrale (16) et une partie périphérique fractionnée en pales radiales (672) alternant circonférentiellement avec une série de languettes radiales (671) dans le plan de la partie centrale (16) du disque porte-garnitures, dans lequel les pales (672) présentent, à la faveur de plis (421), une zone centrale de portée (423) et deux zones périphériques de portée (422) de part et d'autre de ladite zone (423), lesdites zones périphériques (422) étant décalées axialement par rapport à ladite zone centrale (423), caractérisé en ce que certaines au moins desdites languettes (671) présentent, à la faveur d'un pli de raccordement (621), au moins une zone de portée (622) décalée axialement en direction de la zone centrale des pales (672).

2. Disque porte-garnitures selon la revendication 1, caractérisé en ce que la zone de porté (622) est réalisée à l'extrémité libre de la languette (671).

3. Disque porte-garnitures selon la revendication 2, caractérisé en ce que lesdites languettes (671) ont une extrémité libre (622,621) rétrécie circonférentiellement.

4. Disque porte-garnitures selon la revendication 2, caractérisé en ce que les languettes ont une forme effilée en direction de leur périphérie externe, en sorte que la zone d'enracinement avec la partie centrale (16) du disque porte-garnitures est augmentée.

5. Disque porte-garnitures selon la revendication 4, caractérisé en ce que les pattes radiales (671) sont séparées des pales (672) par des fentes (24) en forme de canne.

6. Disque porte-garnitures selon la revendication 2, caractérisé en ce que ladite zone de portée (622) est de hauteur inférieure à celle desdites zones périphériques (422) et à celle de son pli de raccordement (621).

7. Disque porte-garnitures selon la revendication 1, caractérisé en ce que ladite zone de portée (944,1125,1427) est réalisée dans la partie principale de ladite languette à la faveur de la découpe (46,1126,1428).

8. Disque porte-garnitures selon la revendication 7, caractérisé en ce que ladite découpe délimite une patte formée par ladite zone de portée supplémentaire et par son pli la raccordant à la partie principale de la languette.

9. Disque porte-garnitures selon la revendication 7, caractérisé en ce que ladite languette présente également à son extrémité libre à la faveur d'un plis de raccordement (621) une zone de portée (622), décalé axialement en direction de la zone de portée des pales.

10. Disque porte-garnitures selon la revendication 1, caractérisé en ce que la languette (1072) présentent à sa périphérie externe deux zones de porté supplémentaires (1121) raccordées à la partie principale de la languette (1072) par deux plis (1121) obliques par rapport à l'axe de symétrie radial de la languette

11. Disque porte-garnitures selon la revendication 1, caractérisé en ce que des garnitures de frottement sont collées sur les pales radiales et les languettes.

## Claims

1. Lining-holder disc suitable for constituting a friction disc, notably for a motor vehicle, of the kind having a central portion (16) and a peripheral portion divided into radial blades (672) alternating circumferentially with a series of radial tongues (671) in the same plane as the central portion (16) of the lining-holder disc, in which the blades (672) exhibit, by means of folds (421), a central support zone (423) and two peripheral support zones (422) on either side of the said zone (423), the said peripheral zones (422) being offset axially with respect to the said central zone (423), characterised in that at least some of the said tongues (671) exhibit, by means of a connecting fold (621), at least one support zone (622) offset axially in the direction of the central zone of the blades (672).

2. Lining-holder disc according to Claim 1, characterised in that the support zone (622) is formed at the free end of the tongue (671).

3. Lining-holder disc according to Claim 2, characterised in that the said tongues (671) have a free end (622, 621) which is reduced in width circumferentially.

4. Lining-holder disc according to Claim 2, characterised in that the tongues have a shape in which they are tapered towards their outer periphery, so that the root zone in which they are joined to the central portion (16) of the lining-holder disc is increased.

5. Lining-holder disc according to Claim 4, characterised in that the radial lugs (671) are separated from the blades (672) by cane-shaped slots (24).

6. Lining-holder disc according to Claim 2, characterised in that the said support zone (622) has a height which is less than that of the said peripheral zones (422) and less than that of its connecting fold (621).

7. Lining-holder disc according to Claim 1, characterised in that the said support zone (944, 1125, 1427) is produced in the main portion of the said tongue by virtue of the cutout (46, 1126, 1428).

8. Lining-holder disc according to Claim 7, characterised in that the said cutout defines a lug formed by the said supplementary support zone and by its fold joining it to the main portion of the tongue.

9. Lining-holder disc according to Claim 7, characterised in that the said tongue also exhibits at its free end, by means of a connecting fold (621), a support zone (622) which is offset axially in the direction of the support zone of the blades.

10. Lining-holder disc according to Claim 1, characterised in that the tongue (1072) has at its outer periphery two supplementary support zones (1121) joined to the main portion of the tongue (1072) by two folds (1121) which are oblique with respect to the radial axis of symmetry of the tongue.

11. Lining-holder disc according to Claim 1, characterised in that friction linings are bonded to the radial blades and the tongues.

## Patentansprüche

1. Reibbeläge tragende Scheibe zur Bildung einer Reibungskupplungsscheibe, insbesondere für Kraftfahrzeuge, umfassend einen Mittelteil (16) und einen Umfangsteil, der in radiale Segmente (672) unterteilt ist, die sich umfangsmäßig mit einer Reihe von radialen Zungen (671) in der Ebene des Mittelteils (16) der belagtragenden Scheibe abwechseln, wobei die Segmente (672) anhand von Biegungen (421) einen mittleren Auflagebereich (423) und zwei Umfangsauflagebereiche (422) beiderseits des besagten Auflagebereichs (423) aufweisen, wobei die besagten Umfangsauflagebereiche (422) axial im Verhältnis zu dem besagten mittleren Auflagebereich (423) versetzt sind , **dadurch gekennzeichnet,** daß wenigstens einige der besagten Zungen (671) mittels einer Anschlußbiegung (621) mindestens einen Auflagebereich (622) aufweisen, der axial in Richtung des mittleren Auflagebereichs der Segmente (672) versetzt ist.

2. Reibbeläge tragende Scheibe nach Anspruch 1, **dadurch gekennzeichnet**, daß der Auflagebereich (622) am freien Ende der Zunge (671) ausgebildet ist.

3. Reibbeläge tragende Scheibe nach Anspruch 2, **dadurch gekennzeichnet**, daß die besagten Zungen (671) ein umfangsmäßig verengtes freies Ende (622, 621) aufweisen.

4. Reibbeläge tragende Scheibe nach Anspruch 2, **dadurch gekennzeichnet**, daß die Zungen eine in Richtung ihres Außenrands spitz zulaufende Form haben, so daß sich der Überangsbereich zum Mittelteil (16) der die Reibbeläge tragenden Scheibe vergrößert.

5. Reibbeläge tragende Scheibe nach Anspruch 4, **dadurch gekennzeichnet**, daß die radialen Ansätze (671) von den Segmenten (672) durch spazierstockförmige Schlitze (24) getrennt sind.

6. Reibbeläge tragende Scheibe nach Anspruch 2, **dadurch gekennzeichnet,** daß der besagte Auflagebereich (622) eine niedrigere Höhe als die besagten Umfangsauflagebereiche (422) und ihre Anschlußbiegung (621) aufweist.

7. Reibbeläge tragende Scheibe nach Anspruch 1, **dadurch gekennzeichnet**, daß der besagte Auflagebereich (944, 1125, 1427) im Hauptteil der besagten Zunge mittels des Einschnitts (46, 1126, 1428) ausgebildet ist.

8. Reibbeläge tragende Scheibe nach Anspruch 7, **dadurch gekennzeichnet**, daß der besagte Einschnitt einen Ansatz begrenzt, der durch den besagten zusätzlichen Auflagebereich und durch seine Biegung gebildet wird, die ihn an den Hauptteil der Zunge anschließt.

9. Reibbeläge tragende Scheibe nach Anspruch 7, **dadurch gekennzeichnet,** daß die besagte Zunge außerdem an ihrem freien Ende mittels einer Anschlußbiegung (621) einen Auflagebereich (622) aufweist, der axial in Richtung des Auflagebereichs der Segmente versetzt ist.

10. Reibbeläge tragende Scheibe nach Anspruch 1, **dadurch gekennzeichnet,** daß die Zunge (1072) an ihrem Außenrand zwei zusätzliche Auflagebereiche (1121) aufweist, die sich an den Hauptteil der Zunge (1072) durch zwei Biegungen (1121) anschließen, die schräg im Verhältnis zur radialen Symmetrieachse der Zunge verlaufen.

11. Reibbeläge tragende Scheibe nach Anspruch 1, **dadurch gekennzeichnet**, daß Reibbeläge auf den radialen Segmenten und den Zungen aufgeklebt sind.
